Europäisches Patentamt

European Patent Office

Office européen des brevets

(19)

(11) Veröffentlichungsnummer: **0 357 877 B1**

# (12) EUROPÄISCHE PATENTSCHRIFT

(45) Veröffentlichungstag der Patentschrift :
**11.12.91 Patentblatt 91/50**

(51) Int. Cl.⁵ : **A01D 33/02, A01D 17/22**

(21) Anmeldenummer : **89109192.8**

(22) Anmeldetag : **22.05.89**

(54) **Kartoffelschubroder.**

(30) Priorität : **12.08.88 DE 3827409**

(43) Veröffentlichungstag der Anmeldung :
**14.03.90 Patentblatt 90/11**

(45) Bekanntmachung des Hinweises auf die
Patenterteilung :
**11.12.91 Patentblatt 91/50**

(84) Benannte Vertragsstaaten :
**DE ES FR GB IT NL**

(56) Entgegenhaltungen :
**DE-A- 3 631 969**
**DE-B- 1 189 774**
**DE-U- 8 811 945**

(73) Patentinhaber : **MASCHINENFABRIK
NIEWÖHNER GMBH & CO. KG
Immelstrasse 170
W-4830 Gütersloh 11 (DE)**

(72) Erfinder : **Niewöhner, Bruno, sen.
Alexanderweg 20
W-4830 Gütersloh 11 (DE)**
Erfinder : **Niewöhner, Bruno, jun.
Alexanderweg 18
W-4830 Gütersloh 11 (DE)**

(74) Vertreter : **Thielking, Bodo, Dipl.-Ing. et al
Patentanwälte Dipl.-Ing. Bodo Thielking
Dipl.-Ing. Otto Elbertzhagen Gadderbaumer
Strasse 20
W-4800 Bielefeld 1 (DE)**

## Beschreibung

Die Erfindung betrifft einen Kartoffelschubroder mit Rodeeinrichtung und mit Abstand nebeneinander angeordneten Krautketten sowie mindestens einer Siebkette, ferner mit Quertransporteinrichtungen zum Abführen der Kartoffeln in der Mitte zwischen den Krautketten, sowie mit mindestens einer Quertransporteinrichtung zum Ableiten des Kartoffelkrauts von den Krautketten seitlich neben die Abwurfstelle der Kartoffeln.

Bei einem bekannten Kartoffelschubroder dieser Art (DE 3631969A1) schließt sich an die Rodeeinrichtung eine Siebkette an, welche Kartoffeln und Kartoffelkraut gemeinsam nach hinten fördert. Von dieser Siebkette werden Kartoffeln und Kartoffelkraut auf zwei seitlich angeordnete Krautketten übergeben, zwischen denen in der Mitte der Maschine eine Gasse freigelassen ist.

Eine Leiteinrichtung sorgt dafür, daß das von der Siebkette ankommende Erntegut auf die beiden seitlich angeordneten Krautbänder übergeleitet wird. Die Krautbänder umschließen zwei in gleicher Weise mit Abstand voneinander angeordnete Siebketten, welche die vom Kartoffelkraut getrennten Kartoffeln nach hinten auf zwei gegenläufig zum Zentrum fördernde Querförderbänder abgeben. Die Kartoffeln werden von diesen Querförderbändern in der Mitte der Maschine abgeworfen.

Bei der bekannten Vorrichtung erweist es sich als nachteilig, daß das Erntegut zunächst über eine Siebkette geführt werden muß und erst im hinteren Bereich der Maschine auf eine Krautkette übergeben werden kann. Ein weiterer Nachteil der bekannten Vorrichtung liegt darin, daß bei der bekannten Lösung ein mittlerer Krautkettenbereich vollständig fehlt. Wegen des Fehlens der Krautkette im mittleren Bereich kann der mittlere Abstand zwischen den Krautketten und den davon umschlungenen Siebketten nicht beliebig groß gewählt werden. Dies erweist sich als nachteilig insbesondere für Roder, die besonders hohe Ernteleistungen aufweisen müssen, also 4- oder sogar 6-reihige Roder.

Ausgehend von diesem Stand der Technik liegt der Erfindung die Aufgabe zugrunde, einen Kartoffelschubroder der als bekannt vorausgesetzten Art so auszubilden, daß er gute Ernte- und Trennleistungen aufweist und gleichzeitig auch genügend Platz zum Abwurf der geernteten Kartoffeln im Zentrum der Maschine, welches dem Zentrum des Schubschleppers entspricht.

Die Lösung dieser Aufgabe erfolgt erfindungsgemäß dadurch, daß sich die mit Abstand nebeneinander angeordneten Krautketten unmittelbar an die Rodeeinrichtung anschließen und die Siebkette umschlingen, wobei oberhalb der Siebkette in der Lücke zwischen den Krautketten ein die Lücke ausfüllendes Krautkettenstück angeordnet ist, das gleichsinnig mit gleicher Geschwindigkeit wie die benachbarten Krautketten umläuft und dessen vorderes Ende hinter dem vorderen Ende der Siebkette beginnt und das sich bis zu den hinteren Enden der seitlichen Krautketten erstreckt, wobei das untere Trum des Krautkettenstücks oberhalb der Siebkette angeordnet ist.

Die erfindungsgemäße Lösung führt zu einer sauberen und einwandfreien Trennung zwischen Kartoffelkraut und Kartoffeln bei einer besonders schonenden Behandlung der Kartoffeln. Außerdem schafft sie auch bei Maschinen mit großen Ernteleistungen, also beispielsweise Kartoffelschubrodern mit mehr als vier Reihen, ausreichend Platz für einen Abwurf der geernteten Kartoffeln in einem mittleren Kartoffeldamm.

Bevorzugte Ausgestaltungen der Erfindung sind in den weiteren Unteransprüchen beschrieben.

Nachstehend werden zwei bevorzugte Ausführungsformen der Erfindung anhand der Zeichnungen im einzelnen beschrieben. Es zeigen :

Figur 1 — eine schematische Ansicht einer ersten Ausführungsform des Kartoffelschubroders mit Schubschlepper,

Figur 2 — eine Draufsicht auf die Ausführungsform gemäß Figur 1,

Figur 3 — eine Seitenansicht einer zweiten, 6-reihigen Ausführungsform in Transportstellung

Figur 4 — eine Draufsicht auf die Ausführungsform gemäß Figur 3,

Figur 5 — eine Vorderansicht der Ausführungsformen gemäß Figuren 3 und 4,

Figur 6 — eine Vorderansicht der zweiten Ausführungsform in Arbeitsstellung,

Figur 7 — eine Rückansicht der Ausführungsform gemäß Figur 6.

In den unterschiedlichen Ausführungsformen sind gleiche oder einander entsprechende Teile mit gleichen Bezugszeichen versehen.

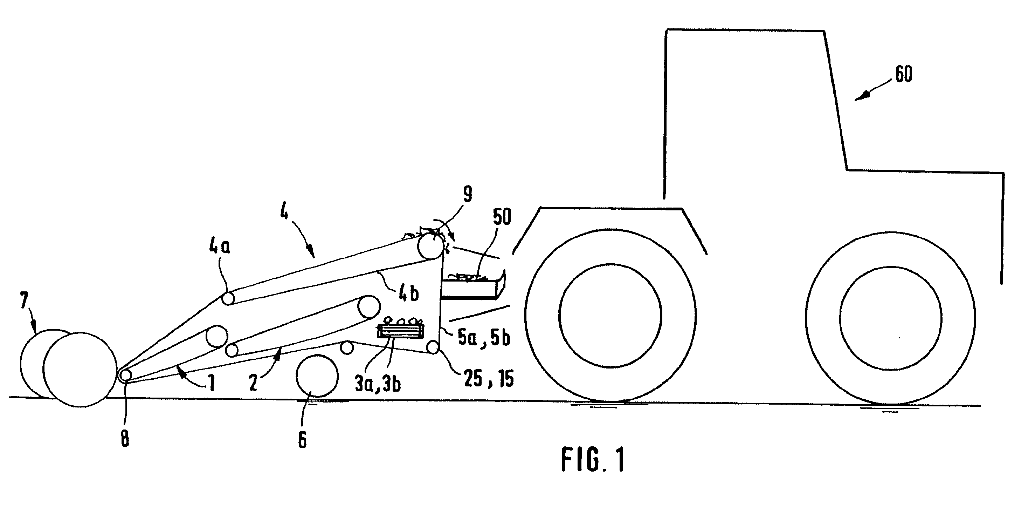

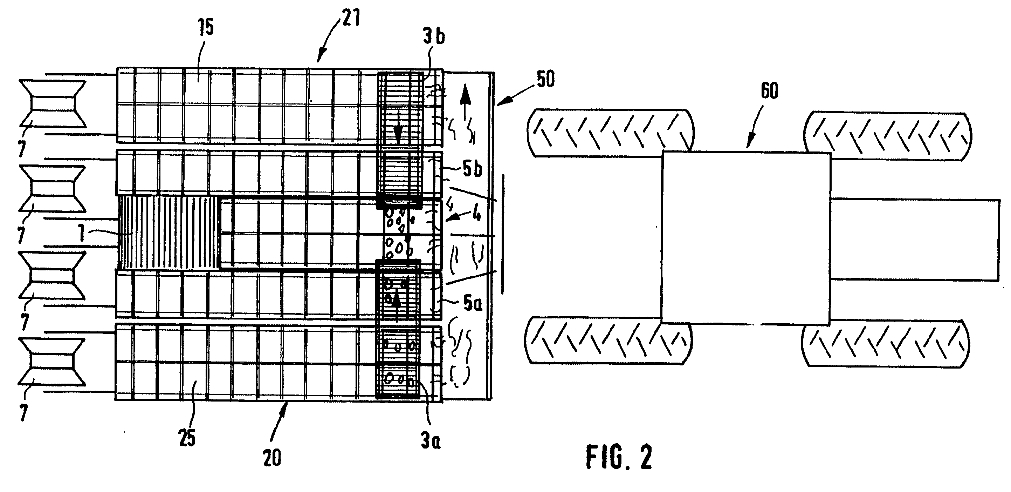

Zunächst zu Figuren 1 und 2 :

Die erste Ausführungsform stellt einen 4-reihigen Kartoffelschubroder dar. Dieser Kartoffelschubroder besitzt vier im Abstand der Kartoffelreihen angeordnete Rodeeinrichtungen 7, die zum Stand der Technik gehören und nicht näher dargestellt sind. Von den Rodeeinrichtungen sind in den Zeichnungen vor allen Dingen die Dammrollen sichtbar. Hinter den Dammrollen sind die Rodeschare vorgesehen. Die von den Rodescharen aufgegrabenen aus Kartoffelkraut und Kartoffeln bestehenden Stauden gelangen von den beiden mittleren Rodeeinrichtungen 7 im wesentlichen auf die beiden seitlichen, mit Abstand voneinander angeordneten umlaufenden Krautketten 5a und 5b. Von den jeweils äußeren Rodeeinrichtungen 7 gelangen die aufgegrabenen Stauden auf die sich unmittelbar an 5a und 5b anschließenden Krautketten 25 und 15.

Die Krautketten 5a, 5b, 15 und 25 laufen in der gleichen Kontur um und werden über die gleichen Antriebs- und Umlenkeinrichtungen geführt. Im vorderen Bereich der Maschine ist eine sich über mindestens zwei Reihen erstreckende Siebkette 1 vorgesehen, die sich auch über die gesamte Maschinenbreite erstrecken kann. An diese vordere Siebkette 1 schließt sich eine hintere Siebkette 2 an, die sich ebenfalls bis zu den seitlichen äußeren Kanten der Krautketten 5a und 5b erstreckt, die sich aber auch über die gesamte Maschinenbreite erstrecken kann. Für bestimmte Anwendungen ist es zweckmäßiger, die Siebketten 1 und 2 in der Maschinenbreite zu unterteilen. Dabei erfolgt der Antrieb der Siebketten 1 und 2 bzw. ihrer entsprechenden Stücke stets über gleichachsige gemeinsame Antriebswalzen oder Antriebsräder.

Oberhalb der Siebkette 2 ist in der zwischen den Krautketten 5a und 5b freien Gasse ein kürzeres Krautband 4 vorgesehen, dessen vorderes Ende 4a mit Abstand hinter dem vorderen Ende 8 der aus den Einzelketten bestehenden Siebkette 1, 2 beginnt. Das obere Trum des die Lücke zwischen den Krautketten 5a und 5b ausfüllenden Krautkettenstücks 4 liegt bündig mit den oberen Trums der Krautketten 5a, 5b, 15 und 25.

Das untere Trum 4b des Krautkettenstücks 4 läuft oberhalb des hinteren Siebkettenbereichs 2 um. Statt der beiden gestuften Siebkettenstücke 1 und 2 kann auch eine durchgehende Siebkette vorgesehen sein.

Innerhalb der Krautketten 5a, 5b, 15 und 25 endet die Siebkette 1, 2 mit Abstand vor dem hinteren abwärts laufenden Trum der Krautketten 5a, 5b, 25 und 15. In dem freigelassenen Bereich laufen zwei Querförderbänder 3a gegenläufig um. Diese Querförderbänder fördern die von der Siebkette nach hinten abgeworfenen Kartoffeln in die Mitte der Maschine, wo sie die Kartoffeln in der Gasse zwischen den beiden Krautketten 5a und 5b abwerfen.

Die Krautketten 5a, 5b 15 und 25 fördern das Kraut über die obere hintere Umlenkwalze 9 nach hinten auf das Querförderband 50 ab, das an allen Ausführungsformen vorhanden, der besseren Klarheit jedoch nur in Figuren 1 und 2 dargestellt ist. Das Querförderband 50 wirft das Kartoffelkraut seitlich neben der Maschine ab.

Der Aufbau des Kartoffelschubroders im Bereich der am weitesten außen liegenden Rodeeinrichtungen und im Bereich der Krautketten 25 und 15 entspricht dem im Schnitt dargestellten Aufbau innerhalb der Krautketten 5a und 5b.

Es ist ohne weiteres auch möglich, die Krautkettenbereiche 5b und 15 einerseits und 5a und 25 andererseits zusammenzufassen.

Der als Schubschlepper eingesetzte Schlepper ist mit 60 bezeichnet. Die Befestigung des Kartoffelschubroders erfolgt mit Hilfe der üblicherweise vorgesehenen, nicht näher dargestellten Dreipunktaufhängung.

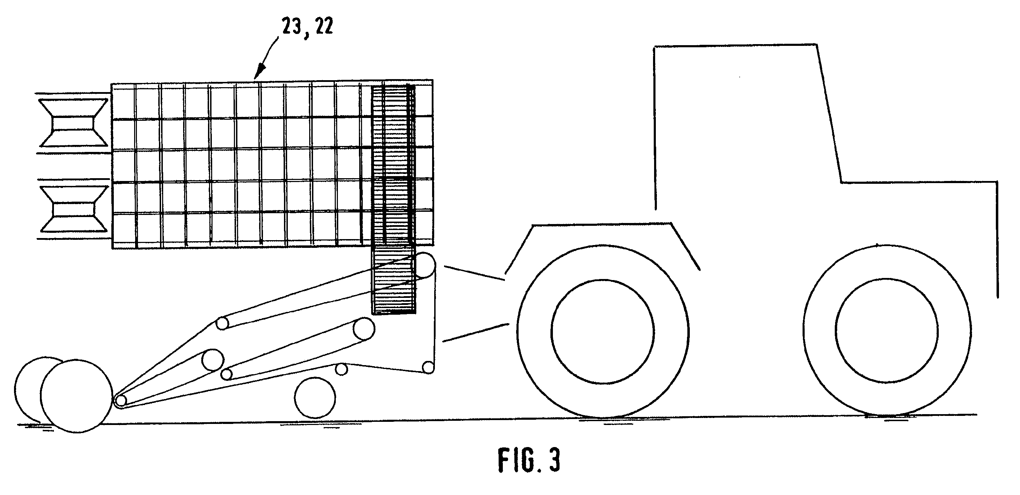

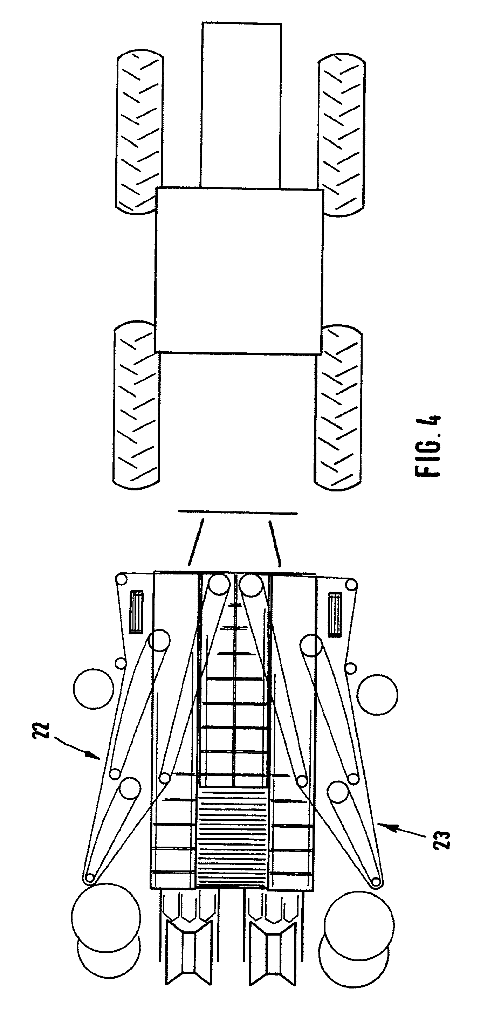

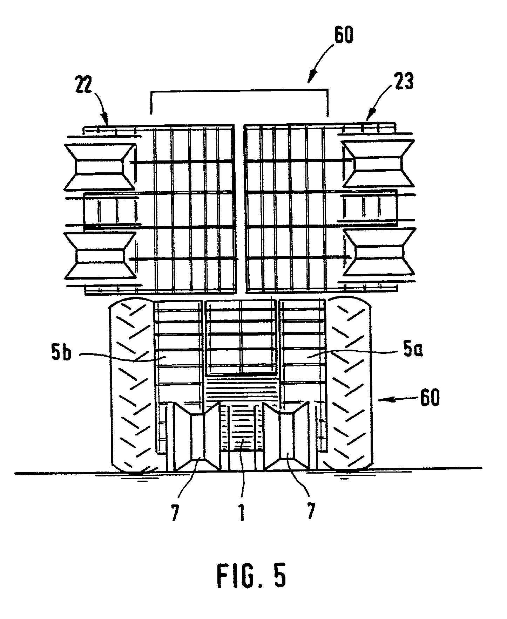

Nun zu der Ausführungsform gemäß Figuren 3 bis 7 :

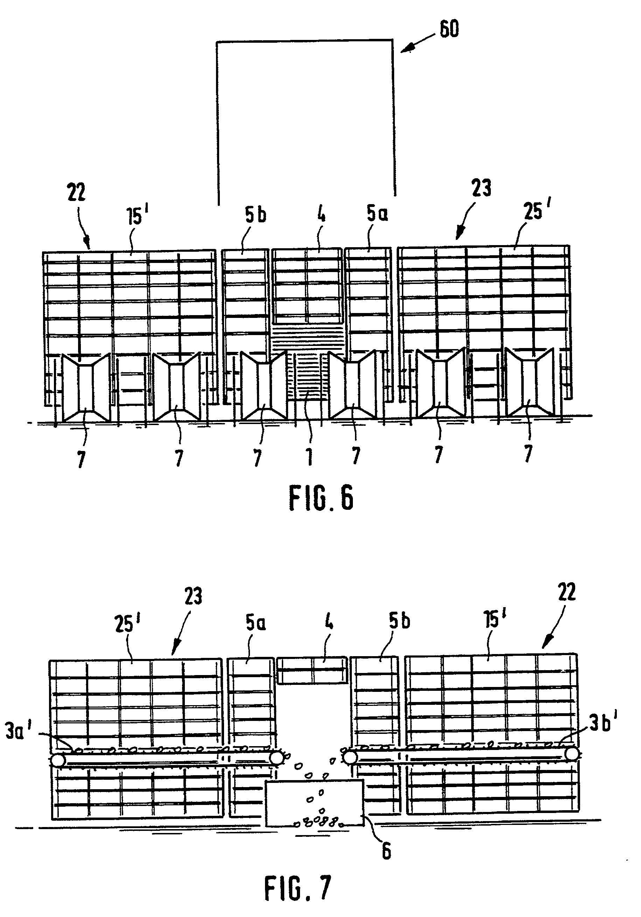

Diese Ausführungsform ist in den Figuren 6 und 7 in Arbeitsstellung dargestellt. Es handelt sich um einen 6-reihigen Roder. Der Aufbau des 6-reihigen Roders im mittleren Bereich entspricht vollständig dem Aufbau des mittleren Bereichs der Ausführungsform gemäß Figuren 1 und 2. Der Aufbau im Bereich der äußeren seitlichen Doppelreihen entspricht dem Aufbau im Bereich der seitlichen Einzelreihen gemäß Figuren 1 und 2 mit der Maßgabe, daß jeweils eine Doppelreihigkeit vorgesehen ist. Bei dieser Ausführungsform ist — wie bereits eingangs erwähnt — die Querfördereinrichtung 50 der größeren Klarheit wegen nicht dargestellt. Die zum Zentrum in die Gasse zwischen den Krautketten 5a und 5b fördernden Querförderbänder 3a' und 3b' entsprechen in ihrer Anordnung der Anordnung bei der ersten Ausführungsform und unterscheiden sich lediglich dadurch, daß sie — entsprechend der größeren Breite der zweiten Ausführungsform — länger sind.

Beide Ausführungsformen werfen die Kartoffeln in einer mittleren Gasse ab auf einen Erdstreifen, der von der Walze 6 planiert worden ist.

Bei der zweiten Ausführungsform sind die mit 22 und 23 bezeichneten kompletten Maschinenbereiche für die jeweils zwei äußeren Kartoffelreihen aus der in Figuren 6 und 7 dargestellten Arbeitsposition um in Längsrichtung des Kartoffelschubroders verlaufende Achsen nach oben verschwenkbar. Durch die Verschwenkbarkeit wird die Breite des Kartoffelschubroders in Transportstellung so reduziert, daß ein normaler Transport über Straßen möglich ist.

Die Transportstellung ist in den Zeichnungsfiguren 3 bis 5 dargestellt.

Bei der zweiten Ausführungsform sind die sich über zwei Reihen erstreckenden Krautketten der jeweils äußeren Maschinenbereiche 22 und 23 mit 15' und 25' bezeichnet.

## Patentansprüche

1. Kartoffelschubroder mit Rodeeinrichtung und mit Abstand nebeneinander angeordneten Krautketten (5a, 5b) sowie mindestens einer Siebkette (1, 2), ferner mit Quertransporteinrichtungen (3a, 3b) zum Abführen

EP 0 357 877 B1

der Kartoffeln in der Mitte zwischen den Krautketten sowie mit mindestens einer Quertransporteinrichtung (50) zum Ableiten des Kartoffelkrauts von den Krautketten seitlich neben die Abwurfstelle der Kartoffeln, dadurch gekennzeichnet, daß sich die mit Abstand nebeneinander angeordneten Krautketten (5a und 5b) unmittelbar an die Rodeeinrichtung (7) anschließen und die Siebkette (1, 2) umschlingen, wobei oberhalb der Siebkette (1, 2) in der Lücke zwischen den Krautketten (5a und 5b) ein die Lücke ausfüllendes Krautkettenstück (4) angeordnet ist, das gleichsinnig mit gleicher Geschwindigkeit wie die benachbarten Krautketten (5a und 5b) umläuft und dessen vorderes Ende (4a) hinter dem vorderen Ende (8) der Siebkette (1, 2) beginnt und das sich bis zu den hinteren Enden der benachbarten Krautketten (5a und 5b) erstreckt, wobei das untere Trum (4b) des Krautkettenstücks (4) oberhalb der Siebkette (1, 2) angeordnet ist.

2. Kartoffelschubroder nach Anspruch 1, dadurch gekennzeichnet, daß das obere Trum (4a) des Krautkettenstücks (4) in der Ebene der oberen Trums der benachbarten Krautketten (5a und 5b) umläuft.

3. Kartoffelschubroder nach Anspruch 1 oder 2, dadurch gekennzeichnet, daß die beiden Krautketten (5a und 5b) und das dazwischen befindliche Krautkettenstück (4) über eine gemeinsame rückwärtige obere Umlenkvorrichtung (9) laufen.

4. Kartoffelschubroder nach einem oder mehreren der Ansprüche 1 bis 3, dadurch gekennzeichnet, daß die Quertransporteinrichtungen zum Abführen der Kartoffeln unterhalb des hinteren Endes der Siebkette (1, 2) angeordnete Quertransportbänder (3a und 3b) sind.

5. Kartoffelschubroder nach einem oder mehreren der Ansprüche 1 bis 4, dadurch gekennzeichnet, daß unterhalb der beabstandeten Krautketten (5a und 5b) in Fahrtrichtung gesehen vor den Quertransporteinrichtungen (3a und 3b) eine Planierwalze angeordnet ist.

6. Kartoffelschubroder nach einem oder mehreren der Ansprüche 1 bis 5, dadurch gekennzeichnet, daß an einem mittleren, zweireihigen Roderbereich seitlich mindestens ein weiterer Maschinenbereich (20 ; 21 ; 22 ; 23) mit Rodeeinrichtung, Siebkette und Krautkette vorgesehen ist, der um eine in Längsrichtung des Roders verlaufende Achse aus seiner Arbeitsstellung in die Transportstellung aufwärts verschwenkbar ist.

## Claims

1. Potato harvester with lifting device and with haulm chains (5a, 5b) spaced out next to each other and with at least one open-web chain (1, 2), furthermore with transverse conveyor devices (3a, 3b) for discharging the potatoes in the middle between the haulm chains as well as with at least one transverse conveyor device (50) for removing the potato haulm from the haulm chains sideways next to the discharge point of the potatoes, characterised in that the haulm chains (5a and 5b) spaced out side by side directly adjoin the lifting device (7) and loop round the open-web chain (1, 2) wherein above the open-web chain (1, 2) in the gap between the haulm chains (5a and 5b) there is a haulm chain member (4) which fills up the gap and rotates in the same direction at the same speed as the adjoining haulm chains (5a and 5b) wherein the front end (4a) of the haulm chain member (4) begins behind the front end (8) of the open-web chain (1, 2) and extends up to the rear ends of the adjoining haulm chains (5a and 5b) wherein the lower run (4b) of the haulm chain member (4) is mounted above the open-wet chain (1, 2).

2. Potato harvester according to claim 1 characterised in that the upper run (4a) of the haulm chain member (4) revolves in the plane of the upper run of the adjoining haulm chains (5a and 5b).

3. Potato harvester according to claim 1 or 2 characterised in that the two haulm chains (5a and 5b) and the haulm chain member (4) located between same run over a common rear upper guide device (9).

4. Potato harvester according to one of more of claims 1 to 3 characterised in that the transverse transport devices for discharging the potatoes are transverse conveyor belts (3a and 3b) mounted underneath the rear end of the open-web chain (1, 2).

5. Potato harvester according to one or more of claims 1 to 4 characterised in that a levelling roller is mounted underneath the spaced haulm chains (5a and 5b) seen in the travel direction in front of the transverse conveyor devices (3a and 3b).

6. Potato harvester according to one or more of claims 1 to 5 characterised in that on a central double-row lifting area at the side there is at least one further machine area (20 ; 21 ; 22 ; 23) with lifting device, open-web chain and haulm chain which can swivel up about an axis running in the longitudinal direction of the lifter from a working position into the transport position.

## Revendications

1. Arracheuse de pommes de terre poussée comprenant un dispositif d'arrachage, des chaînes de trans-

4

port de fanes (5a, 5b) disposées parallèlement, à intervalle l'une de l'autre, ainsi qu'une chaîne de criblage(1, 2) au moins, et, de plus, des dispositifs de transport transversal (3a, 3b) pour l'éjection des pommes de terre, placé au centre, entre les chaînes de transport de fanes, ainsi qu'un dispositif de transport transversal (50) au moins, pour la déviation des fanes de pommes de terre, convoyées sur les chaînes de transport de fanes, en vue de les éjecter latéralement à côté des pommes de terre, caractérisée par le fait que que les chaînes de transport de fanes (5a, 5b), disposées parallèlement à intervalle l'une de l'autre, font directement suite au dispositif d'arrachage (7) et contournent la chaîne de criblage (1, 2), le vide entre les chaînes de transport de fanes (5a, 5b) étant comblé, au-dessus de la chaîne de criblage (1, 2), par un morceau de chaîne de transport de fanes (4), qui, tournant dans le même sens et à la même vitesse que les chaînes de transport de fanes avoisinantes, s'étend jusqu'aux extrémités postérieures des chaînes de transport de fanes latérales (5a, 5b), son extrémité antérieure (4a) étant située derrière l'extrémité antérieure (8) de la chaîne de criblage (1, 2), et son tronçon inférieur (4b) étant disposé au-dessus de la chaîne de criblage (1, 2).

2. Arracheuse de pommes de terre poussée selon revendication 1, caractérisée par le fait que le tronçon supérieur (4) du morceau de chaîne de transport de fanes (4) tourne au niveau du tronçon supérieur des chaînes de transport de fanes voisines (5a et 5b).1

3. Arracheuse de pommes de terre poussée selon revendications 1 et 2, caractérisée par le fait que les deux chaînes de transport de fanes (5a et 5b) et le morceau de chaîne de transport de fanes (4), situe entre elles, passent par un dispositif de renvoi supérieur, arrière (9) commun.

4 Arracheuse de pommes de terre poussée selon une ou plusieurs revendications 1 à 3, caractérisée par le fait que les dispositifs de transport transversaux, pour l'éjection des pommes de terre sont des bandes de transport transversales (3a et 3b), disposées au-dessous de l'extrémité arrière de la chaîne de criblage (1, 2).

5. Arracheuse de pommes de terre poussée selon une ou plusieurs revendications 1 à 4, caractérisée par le fait qu'un rouleau planeur est disposé sous les chaînes de transport de fanes (5a et 5b), en amont des dispositifs de transport transversaux (3a et 3b), vu dans le sens de marche.

6. Arracheuse de pommes de terre poussée selon une ou plusieurs revendications 1 à 5, caractérisée par le fait qu'au moins un autre secteur de machine (20 ; 21 ; 22 ; 23), pourvu de dispositif d'arrachage, chaîne de criblage et chaîne de transport de fanes, est prévu, latéralement, à un secteur d'arrachage médian à deux rangs, cet autre secteur étant pivotable vers le haut, à partir de la position de fonctionnement, et tournant sur un axe qui s'étend dans le sens longitudinal de l'arracheuse.

FIG. 1

FIG. 2

23, 22

FIG. 3

EP 0 357 877 B1

FIG. 4

FIG. 5

FIG. 6

FIG. 7

11